(19) Europäisches Patentamt

European Patent Office

Office européen des brevets

(11) Numéro de publication: **0 181 815 B1**

(12) **FASCICULE DE BREVET EUROPEEN**

(45) Date de publication de fascicule du brevet: **20.05.92** (51) Int. Cl.⁵: **B60L 13/02**

(21) Numéro de dépôt: **85402122.7**

(22) Date de dépôt: **05.11.85**

(54) Systèmes ferroviaires utilisant un moteur linéaire de propulsion des trains.

(30) Priorité: **05.11.84 FR 8416796**

(43) Date de publication de la demande:
**21.05.86 Bulletin 86/21**

(45) Mention de la délivrance du brevet:
**20.05.92 Bulletin 92/21**

(84) Etats contractants désignés:
**BE CH DE FR GB IT LI NL SE**

(56) Documents cités:
**DE-A- 2 041 874**
**US-A- 3 974 778**

**PATENT ABSTRACTS OF JAPAN, vol. 8, no.
80 (M-289)[1517], 12 avril 1984; & JP-A-58 224
504**

(73) Titulaire: **Geais, Robert**
**10, rue Talma**
**F-75016 Paris(FR)**

(72) Inventeur: **Geais, Robert**
**10, rue Talma**
**F-75016 Paris(FR)**

(74) Mandataire: **Weinmiller, Jürgen et al**
**Lennéstrasse 9 Postfach 24**
**W-8133 Feldafing(DE)**

## Description

Le progrès du transport ferroviaire, comme d'ailleurs celui de tout autre mode de transport, se manifeste en définitive par la croissance de la qualité des services offerts (et en premier lieu par l'augmentation des vitesses commerciales) et par la diminution des coûts unitaires de transport, (coûts à la place offerte debout, assise ou couchée dans le cas du transport des voyageurs, coût à la tonne ou au mètre cube dans le cas du transport des marchandises), l'augmentation de la charge utile des trains étant d'ailleurs un facteur essentiel de cette diminution des coûts unitaires.

La recherche, par l'industrie ferroviaire, d'appareils de propulsion de plus en plus puissants, a toujours été poursuivie activement, parce que ces appareils, donnant le moyen d'augmenter les vitesses commerciales et - ou les charges utiles, sont par conséquent un moyen particulièrement efficace de progrès ferroviaire.

Il convient d'ajouter que les solutions techniques retenues et mises au point pour la réalisation d'appareils de propulsion de plus en plus puissants, ont naturellement été utilisées pour construire des appareils de toutes puissances, en améliorant leurs performances et en réduisant leur coût. Ainsi l'amélioration des performances et la diminution du coût, (ramené à l'unité de puissance) de l'ensemble des appareils de propulsion sont généralement apparues, comme des "retombées" d'une course à la puissance maximale, à la vitesse maximale et à la charge utile maximale.

La diminution du coût de la propulsion (ramené à l'unité de puissance) a contribué à son tour au progrès ferroviaire, en ajoutant ses effets à ceux de l'augmentation des vitesses et - ou - de l'augmentation de charge utile.

Concernant l'utilisation systématique du moteur linéaire pour la propulsion ferroviaire, on peut faire les observations suivantes :

1) normalement une telle utilisation aboutira à de nouveaux systèmes ferroviaires différents des systèmes actuels qui n'utilisent que des appareils de propulsion classiques.

2) ou ne s'engagera dans la voie du développement de ces nouveaux systèmes que si on est assuré que le coût en sera réduit de telle sorte qu'il puisse être remboursé assez rapidement par une amélioration du bilan de l'exploitation ferroviaire,

3) c'est du progrès ferroviaire tel qu'il a été défini ci-dessus ici qu'on peut attendre un tel résultat et il y a tout lieu de penser qu'aujourd'hui comme hier, c'est l'augmentation de la puissance de propulsion et de la diminution de son coût unitaire, qui ouvriront le plus largement la voie aux progrès ferroviaires,

4) pour que le moteur linéaire trouve sa place dans la panoplie des appareils de propulsion ferroviaire, il est donc nécessaire qu'il soit employé de telle sorte qu'il en résulte la mise à la disposition des entreprises ferroviaires de puissances de propulsion supérieures à celles dont elles pourraient disposer en utilisant seulement les appareils classiques les plus modernes. Il faut de plus que ces puissances supérieures soient obtenues à un moindre prix unitaire,

5) l'avantage fondamental du moteur linéaire, réside dans le fait qu'il permet d'obtenir un tel résultat parce qu'il rend possible de ne conserver sur le train que le secondaire du moteur, qu'on peut constituer d'éléments simples, légers et de très faible encombrement; c'est là un avantage de même nature que celui qui a contribué au succès de la traction électrique parce qu'elle allège le poids de la motorisation à bord des trains en plaçant au sol l'appareil de production de l'énergie que la traction autonome maintient à bord des trains; en outre il ne nécessite pas de profondes et coûteuses modifications des formes et des structures des véhicules.

6) Un second avantage, relativement secondaire par rapport au précédent, des nouveaux systèmes ferroviaires, dont la panoplie comprendra le moteur linéaire, résidera dans le fait qu'on pourra ne plus compter uniquement sur l'adhérence rail-roue pour produire des efforts d'adhérence ou de freinage.

Jusqu'ici le principal obstacle au développement du moteur linéaire pour la propulsion ferroviaire a résidé dans le fait qu'on n'a généralement envisagé son emploi qu'en vue de tirer parti du second avantage ci-dessus, sans voir que seul le premier pouvait être déterminant. C'est ainsi par exemple que dans un article publié dans la revue Sciences et Vie, sous le titre de "lavenir de la traction" M. Nouvion ne mentionnait même pas le moteur linéaire au chapitre de l'augmentation des puissances, puisque, dans un autre chapitre consacré au moteur linéaire, il n'en retenait que son second avantage en écrivant "l'avantage de ce système est de se libérer de l'adhérence rail-roue pour produire un effort tant de traction que de freinage. On n'est plus obligé de faire lourd pour avoir de l'adhérence".

Dans la littérature se rapportant à l'emploi du moteur linéaire pour la propulsion ferroviaire, on peut citer aussi les documents suivants :

- DE-A-2 041 874 qui décrit un système ferroviaire comprenant un moteur linéaire permettant la propulsion de trains, le secondaire du moteur linéaire étant porté par les véhicules composant le train et le primaire étant fixé au sol ou inversement.

- US-A-3 974 778 qui décrit un dispositif de réglage de la vitesse d'un train à propulsion par moteurs linéaires, les primaires étant sur la voie et les secondaires étant portés par les wagons,
- JP-A-58 224 504 qui divulgue l'utilisation, dans un convoi ferroviaire, d'un moteur rotatif et d'un moteur linéaire. Ce dernier est employé pour le franchissement des rampes.

La présente invention, concernant des systèmes ferroviaires disposant pour la propulsion des trains d'un moteur linéaire, combine à cet effet les dispositions suivantes relatives à l'exploitation, à l'équipement des lignes et au moteur linéaire lui-même et à ses caractéristiques originales :

a) Les transports (voyageurs ou marchandises) utilisent notamment des groupes de véhicules, normalement indissociables et formant "des unités de transport" toutes de même longueur L.

Pour constituer un train, on attelle entre elles un certain nombre n de ces unités pour former un ensemble E de longueur nL.

Les trains sont, soit constitués seulement d'un tel ensemble E, soit complétés par des véhicules classiques (matériel moteur ou matériel roulant) placés en tête ou en queue de l'ensemble E.

Chaque unité du transport est porteuse de N éléments identiques S, constitutifs du secondaire du moteur linéaire, toujours disposés de la même manière, c'est-à-dire d'une façon discontinue et régulière.

Les nxN éléments S, d'un ensemble E, sont régulièrement espacés de $s_1 = \frac{L}{N}$ mètres.

Les éléments S peuvent être groupés par deux pour constituer des doublets, et dans ce cas, ces doublets sont régulièrement espacés de $s_2 = \frac{2L}{N}$ .

b) Le moteur linéaire est à fonctionnement intermittent du fait qu'alternent des sections de voie équipées d'inducteurs G, éléments constitutifs du primaire du moteur linéaire, et des sections de voie non équipées de tels groupes; les premières sont dites actives, les autres inactives.

C) Sur chaque section de voie active, les éléments G ont tous la même longueur $s_1$, ou $s_2$ ou multiple de $s_1$ ou de $s_2$ .

Les éléments G sont régulièrement espacés de L mètres.

Comme celle du secondaire, la structure du primaire est donc discontinue et régulière.

d) Dans ces conditions le moteur linéaire fournit, à partir du moment où le train a pénétré dans une section active, jusqu'au moment où il commence à la quitter, une puissance continue proportionnelle au nombre n, d'unités de transport entrant dans la composition du train.

e) Dans une première hypothèse les unités de transport ne comprennent que des voitures ou des wagons, (à l'exclusion de tout élément moteur classique, agissant sur certains essieux).

Dans cette première hypothèse le problème de franchissement des sections de voie inactive, est résolu de deux manières:

$e_1$) ou bien une ou plusieurs locomotives sont placées en tête ou en queue de l'ensemble E; leur puissance est alors utilisée, non seulement au franchissement des sections inactives, mais également au franchissement des sections de voie actives, cette puissance s'ajoutant alors à celle du moteur linéaire pendant la durée de ce franchissement. La marche du train est réglée uniquement par action humaine ou automatisée sur la ou les locomotives, le moteur linéaire entrant automatiquement en action au moment voulu, soit parce qu'il est constamment sous tension, soit parce qu'il se trouve mis en tension par l'approche du train.

$e_2$) ou bien - dans le cas de sections de voies inactives relativement courtes, ou en pente - le franchissement de ces sections est effectué "par élan". La marche du train est réglée par action sur les éléments G constitutifs de primaire du moteur linéaire.

f) Dans une seconde hypothèse, des éléments moteurs classiques c'est-à-dire agissant sur certains essieux, entrent dans la composition de certaines unités de transport dites alors automotrices.

Dans ce cas, la marche du train est, comme dans le cas $e_1$, réglée par action (humaine ou automatique) sur ces éléments moteurs, qui sont utilisés pour la propulsion tout le long du parcours, leur puissance s'ajoutant à celle du moteur linéaire au franchissement des sections de voie active.

L'invention a donc pour objet un système ferroviaire utilisant le principe du moteur linéaire pour la propulsion d'un train sur une ligne ferroviaire, le train comprenant dans sa composition au moins une unité de transport constituée d'un groupe de véhicules pouvant être moteurs et/ou porteurs et/ou automoteurs, le moteur linéaire étant constitué par un primaire placé au sol et un secondaire porté par l'unité de transport, le primaire et le secondaire ayant chacun une structure discontinue et régulière, caractérisé en ce que :

- le train comporte soit une unité de transport, soit n unités de transport jointives, chaque unité étant de longueur L,
- la ligne ferroviaire comporte des sections actives qui sont des sections sur lesquelles sont disposés des éléments constitutifs du primaire du moteur linéaire, ces éléments étant régulièrement espacés d'une distance L,
- la ligne ferroviaire comporte également des sections inactives qui sont des sections ne comportant pas d'éléments constitutifs du primaire,
- le secondaire du moteur linéaire est constitué par des éléments portés par les véhicules, ces éléments formant une structure discontinue et régulière pour le secondaire de façon que le moteur linéaire fournisse au train, dans les sections actives, une puissance continue de propulsion.

Les éléments S constitutifs du secondaire du moteur linéaire peuvent être simplement des plaques métalliques portées chacune par au moins deux essieux du train; leur face inférieure est à une petite distance de la face supérieure des inducteurs du moteur linéaire disposés sur le sol entre les paires de rails linéaires.

Les essieux d'une même unité de transport sont tous porteurs de caisses, qu'il s'agisse de caisses de locomotive, de caisses de voitures de voyageurs ou de caisses de wagons de marchandises; certains peuvent être moteurs, d'autres pas : certains peuvent porter des plaques S, d'autres pas : un train peut donc avoir quatre sortes d'essieux, portant évidemment tous des caisses, des essieux C uniquement porteurs de caisses, des essieux M moteurs, des essieux P porteurs d'une plaque S et des essieux MP à la fois moteurs et porteurs d'une plaque S.

Le dessin annexé montre schématiquement à titre d'exemple, deux modes de réalisation de la présente invention.

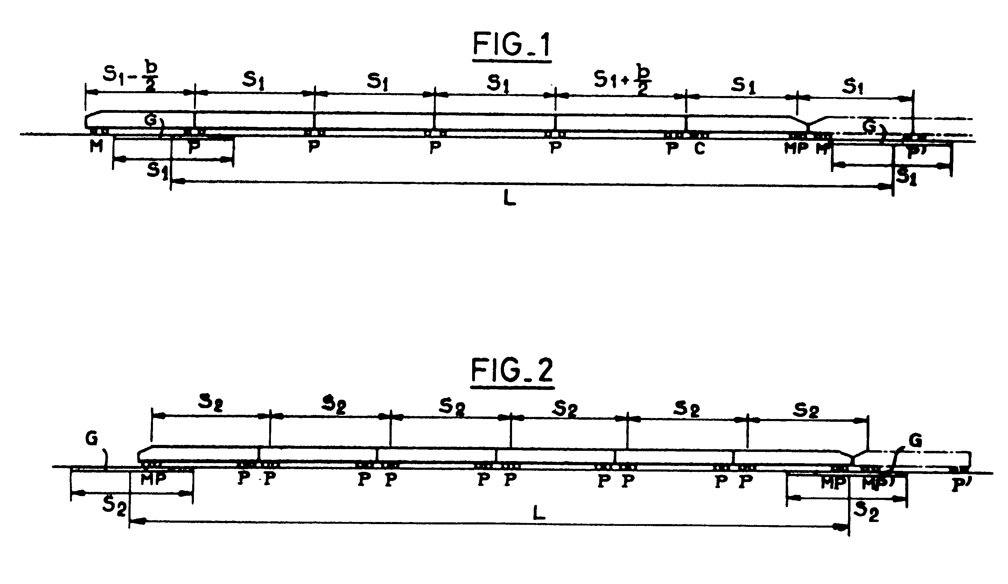

Les figures 1 et 2 montrent deux possibilités différentes de réalisation d'unités de transport et de trains.

Dans chacune d'elles les unités de transport comportent des éléments moteurs agissant sur certains essieux.

L'unité de transport que montre la figure 1 comporte six caisses, portées par huit bogies à deux essieux chacun; le premier bogie est un bogie MP, le second un bogie C, les cinq suivants des bogies P, et le huitième un bogie M; le nombre N des plaques S est six ; la longueur des 1er, 3ème, 4ème et 5ème caisses est $s_1$ qui est aussi celle de l'espacement entre les différentes plaques S. La longueur de la seconde caisse est $s_1 + \frac{b}{2}$, celle de la 6ème est $s_1 - \frac{b}{2}$, b étant la longueur d'un bogie.

La figure montre deux inducteurs G de longueur $S_1$, dont la distance entre axes est L.

Si on procède au jumelage de deux telles unités de transport, on constitue un train portant 2N soit 12 plaques, la distance entre axes séparant le dernier bogie P' de la nouvelle rame, supposée placée en tête du train, du premier bogie MP de la rame primitive étant $S_1$. La poussée s'exerçant sur le train ainsi constitué est le double de celle qui s'exerce sur chacune des unités qui le composent. D'une manière générale, la puissance du moteur linéaire varie proportionnellement au nombre n d'unités de transport entrant dans la composition du train.

L'unité de transport que montre la figure 2 comporte également six caisses, portées chacune par deux bogies à deux essieux : le nombre total des plaques est de douze : elles forment six doublets espacés de $S_2$ : le premier et le dernier bogie sont les bogies MP, les dix autres des bogies P.

La figure montre deux inducteurs G de longueur $S_2$ dont la distance entre axes est L.

Si on procède au jumelage de deux telles unités de transport, le dernier bogie MP' de l'unité de transport placé en tête et le premier bogie MP de la seconde unité de transport forment un doublet, le train formé par les deux unités de transport comportant 24 bogies formant douze doublets régulièrement espacés de $S_2$.

Le nouveau système ferroviaire et le moteur linéaire qu'il utilise trouveront leur emploi lorsqu'on voudra disposer d'une puissance de propulsion supérieure à celle dont on pourrait disposer dans le cas d'un système classique, et cela quels que soient les progrès qui pourront dans l'avenir être réalisés dans le domaine de la propulsion classique, et/ou lorsqu'on voudra aboutir à un meilleur bilan d'exploitation que dans un système classique.

Le nouveau système pourra être utilisé soit pour améliorer l'exploitation des lignes d'un réseau existant, soit dans le cas de la construction d'une ligne nouvelle.

Le nouveau système pourra être utilisé dans le cas des chemins de fer d'intérêt général et dans le cas des chemins de fer urbains.

**Revendications**

1. Système ferroviaire utilisant le principe du moteur linéaire pour la propulsion d'un train sur une ligne ferroviaire, le train comprenant dans sa composition au moins une unité de transport constituée d'un groupe de véhicules pouvant être moteurs et/ou porteurs et/ou automoteurs, le moteur linéaire étant constitué par un primaire placé au sol et un secondaire porté par l'unité de transport, le primaire et le secondaire ayant chacun une structure discontinue et régulière, caractérisé en ce que :
    - le train comporte soit une unité de transport, soit n unités de transport jointives, chaque unité étant de longueur L,

- la ligne ferroviaire comporte des sections actives qui sont des sections sur lesquelles sont disposés des éléments (G) constitutifs du primaire du moteur linéaire, ces éléments étant régulièrement espacés d'une distance L,
- la ligne ferroviaire comporte également des sections inactives qui sont des sections ne comportant pas d'éléments constitutifs du primaire,
- le secondaire du moteur linéaire est constitué par des éléments portés par les véhicules, ces éléments formant une structure discontinue et régulière pour le secondaire de façon que le moteur linéaire fournisse au train, dans les sections actives, une puissance continue de propulsion.

2. Système ferroviaire selon la revendication 1, caractérisé en ce que les éléments du secondaire sont portés par des bogies des véhicules, ces éléments étant fixés directement sur les essieux de ces bogies.

3. Système ferroviaire selon la revendication 2, caractérisé en ce que l'unité de transport est composée de véhicules à deux bogies et attelés entre eux, chaque bogie portant un élément du secondaire, la structure discontinue du secondaire comprenant des doublets, chaque doublet étant constitué par un élément du secondaire porté par un véhicule et par un élément du secondaire qui lui est le plus proche et qui est porté par le véhicule voisin.

4. Système ferroviaire selon l'une quelconque des revendications 1 à 3, caractérisé en ce que les éléments du secondaire sont constitués par des plaques métalliques.

5. Système ferroviaire selon l'une quelconque des revendications 1 à 4, caractérisé en ce que le train comporte également un ou plusieurs véhicules moteurs ou non, en plus de l'unité ou des n unités de transport, situés en tête ou en queue de train.

6. Système ferroviaire selon l'une quelconque des revendications 1 à 4, caractérisé en ce que l'unité de transport comprend au moins un véhicule équipé d'un moteur classique agissant sur un bogie dit bogie moteur.

7. Système ferroviaire selon la revendication 6, caractérisé en ce que le bogie moteur est également porteur d'un élément du secondaire du moteur rotatif.

**Claims**

1. A railway system using a linear motor for the propulsion of the train along a railway track, the train including in its composition at least one transport unit constituted of a group of vehicles of the motive and/or portative and/or automotive type, the linear motor being constituted by a primary, placed on the ground, and by a secondary, carried by the transport unit, the primary and the secondary having each a discontinuous and regular structure, characterized in that
   - the train includes either one transport unit or n abutting transport units, each unit having a length L,
   - the railway track includes active sections, i.e. sections on which constitutive elements (G) of the primary of the linear motor are disposed, said elements being regularly spaced apart by a distance L,
   - the railway track further includes inactive sections, i.e. sections, which do not include constitutive elements of the primary, and
   - the secondary of the linear motor is constituted by elements carried by the vehicles, said elements forming a discontinuous and regular structure for the secondary, such that the linear motor delivers a continuous propulsion power to the train in the active sections.

2. A railway system according to claim 1, characterized in that the elements of the secondary are carried by bogies of the vehicles, said elements being fixed directly to the axles of the bogies.

3. A railway system according to claim 2, characterized in that the transport unit is composed of vehicles each having two bogies and being coupled with one another, each bogie carrying an element of the secondary, the discontinuous structure of the secondary comprising doublets, each doublet being constituted by an element of the secondary carried by a vehicle and by an element of the secondary which is the closest to it and carried by the adjacent vehicle.

4. A railway system according to any one of claims 1 to 3, characterized in that the elements of the secondary are constituted by metal plates.

5. A railway system according to any one of claims 1 to 4, characterized in that the train also includes one or more motive or non-motive vehicles in addition to the one or to the n transport units placed on top or at the end of the train.

6. A railway system according to any one of claims 1 to 4, characterized in that the transport unit comprises at least a vehicle equipped with a conventional motor acting upon a bogie referred to as motive bogie.

7. A railway system according to claim 6, characterized in that the motive bogie is also carrier of an element of the secondary of the rotary motor.

**Patentansprüche**

1. Eisenbahnsystem auf der Basis des Linearmotors zum Antreiben eines Zugs auf einer Eisenbahnlinie, wobei der Zug in seiner Zusammensetzung mindestens eine Transporteinheit, bestehend aus einer Gruppe von Wagen mit Antriebs- und/oder Trag- und/oder Selbstantriebsfunktion aufweist, wobei der Linearmotor aus einer auf dem Boden angebrachten Primärwicklung und einer von der Transporteinheit getragenen Sekundärwicklung besteht und wobei die Primärwicklung und die Sekundärwicklung je eine diskontinuierliche und regelmäßige Struktur besitzen,
dadurch gekennzeichnet, daß
- der Zug entweder eine Transporteinheit oder n aneinanderstoßende Transporteinheiten umfaßt, wobei jede Einheit die Länge L besitzt,
- die Eisenbahnlinie aktive Abschnitte aufweist, bei denen es sich um Abschnitte handelt, auf denen konstitutive Elemente (G) der Primärwicklung des Linearmotors angeordnet sind, wobei diese Elemente einen regelmäßigen Abstand L besitzen,
- die Eisenbahnlinie ebenfalls außerdem Abschnitte aufweist, die keine konstitutiven Elemente der Primärwicklung besitzen, und
- die Sekundärwicklung des Linearmotors aus Elementen besteht, die von den Wagen getragen werden, wobei diese Elemente eine für die Sekundärwicklung diskontinuierliche und regelmäßige Struktur bilden, derart, daß der Linearmotor dem Zug in den aktiven Abschnitten eine kontinuierliche Antriebsleistung liefert.

2. Eisenbahnsystem nach Anspruch 1, dadurch gekennzeichnet, daß die Sekundärelemente von den Fahrgestellen der Wagen getragen werden, wobei die Elemente direkt auf den Achsen dieser Fahrgestelle befestigt sind.

3. Eisenbahnsystem nach Anspruch 2, dadurch gekennzeichnet, daß die Transporteinheit aus aneinandergehängten Wagen mit je zwei Fahrgestellen zusammengesetzt ist, wobei jedes Fahrgestell ein Sekundärelement trägt und die diskontinuierliche Struktur der Sekundärwicklung Dubletten aufweist, die je aus einem Element der Sekundärwicklung, das von einem Wagen getragen, und einem Element der Sekundärwicklung bestehen, das ihm am nächsten ist und vom benachbarten Wagen getragen wird.

4. Eisenbahnsystem nach einem beliebigen der Ansprüche 1 bis 3, dadurch gekennzeichnet, daß die Elemente der Sekundärwicklung aus Metallplatten bestehen.

5. Eisenbahnsystem nach einem beliebigen der Ansprüche 1 bis 4, dadurch gekennzeichnet, daß der Zug an der Spitze oder am Ende ebenfalls einen oder mehrere Wagen, mit oder ohne Antriebsmotor, zusätzlich zu der einen oder den n Transporteinheiten umfaßt.

6. Eisenbahnsystem nach einem beliebigen der Ansprüche 1 bis 4, dadurch gekennzeichnet, daß die Transporteinheit mindestens einen mit einem klassischen Motor ausgerüsteten Wagen aufweist, der auf ein Fahrgestell, Antriebsgestell genannt, wirkt.

7. Eisenbahnsystem nach Anspruch 6, dadurch gekennzeichnet, daß das Antriebsgestell außerdem Träger eines Elements der Sekundärwicklung des Rotationsmotors ist.

FIG.1

FIG.2